# DEMANDE DE BREVET EUROPEEN

(11) **EP 0 741 285 A2**
(43) Date de publication de la demande: **06.11.1996**
(21) Numéro de dépôt: 96400871.8
(22) Date de dépôt: 24.04.1996
(51) Int. Cl.: G01K 11/06

(54) **Indicateur d'état de conservation pour produits congelés ou réfrigérés de type industriel, médical ou alimentaire**

(30) Priorité: 27.04.1995 FR 9505194
(71) Demandeur: SOCIETE COOL S.a.r.l., F-07800 La Voulte sur Rhône (FR)
(72) Inventeur: Toporenko, Yves, 75011 Paris (FR); Berrebi, Georges, 26270 Cliousclat (FR)
(74) Mandataire: Andreeff, François

(57) **Abrégé**

L'invention concerne un indicateur d'état de conservation pour produits congelés ou réfrigérés de type industriel, médical ou alimentaire caractérisé par l'utilisation d'un étui réservoir (1), en matière plastique transparente ou en verre, de forme géométrique quelconque dont l'orifice de remplissage est obturé par un bouchon de cire ou équivalent (3) coulée à chaud sur la surface du liquide disposé à l'intérieur de l'étui, et permet d'obtenir un remplissage intégral de la cavité interne à l'étui (1). L'invention est caractérisée par l'ouverture de la cavité interne de l'étui lors d'une activation manuelle, ou d'une activation automatique permettant de mettre à profit le phénomène "solidus-liquidus" lors d'une rupture de la chaîne du froid qui entraîne la liquéfaction du volume eutectique solidifié et son contact avec un ou plusieurs capillaires ou piste capillaire (4) l'ensemble étant disposé à l'intérieur d'un sachet souple et transparent (5) dont une partie est visible à l'extérieur de l'emballage, I'étui réservoir étant protégé mécaniquement par une coque rigide (7) pourvue d'une surface adhésive (6).

## Description

La présente invention concerne un dispositif qui permet de reconnaître par un simple examen visuel si un produit froid et surtout surgelé est propre ou non à la consommation.

Les surgelés sont des produits sûrs fabriqués avec une extrême rigueur présentant des intérêts incontestables sur le plan microbiologique (au-dessous de - 18 °C, les microbes ne se développent plus) ; toutefois des intoxications alimentaires sont possibles, notamment dans le cas où les surgelés sont accidentellement décongelés puis recongelés.

Un acheteur doit pouvoir vérifier qu'un produit n'a subi aucune rupture de la chaîne du froid, car on n'est pas sans ignorer qu'entre le moment où le produit est surgelé et le moment où il est consommé, la chaîne du froid peut être rompue en de nombreuses occasions.

En effet, à - 18 °C, on stoppe la multiplication des microbes, des levures, et des moisissures. Plus tard à la décongélation, les micro-organismes reprennent une vie intense. Entre le transport des marchandises, des livraisons, la vente et les manipulations de la ménagère, la moindre négligence peut être fatale. De récentes enquêtes au niveau des commerces et des restaurants ont prouvé que la chaîne du froid est rompue dans 30 % des cas (porte d'une armoire réfrigérée mal fermée pendant tout un week-end ou interruption d'électricité, etc.). En dehors de l'examen des boîtes ou des paquets proposés sur le marché des consommateurs, cet examen n'étant d'ailleurs pas fiable, on trouve aujourd'hui diverses techniques dont une notamment est décrite dans le brevet français relatif aux produits surgelés FR-A-2626072 de Monsieur TOPORENKO proposant un moyen simple et rapide de contrôle de la chaîne du froid, qui consiste à utiliser un petit glaçon de forme géométrique, coloré dans sa masse, fluorescent de surcroît, moulé sur un support, ou maintenu entre des index, le tout étant intégré à l'intérieur d'une minuscule boîte hermétique transparente qui accompagne l'emballage du produit surgelé d'une façon inviolable. La présente invention concerne de nouvelles réalisations pratiques perfectionnées de l'art antérieur en utilisant un mélange liquide apte à contrôler des températures de l'ordre de +5°C à -30°C. Le dispositif selon l'invention prend en compte non seulement la variation de température, mais également sa durée. Il peut être utilisé pour le froid négatif et le froid positif. Ce dispositif simple et peu coûteux, a l'avantage d'avoir un fonctionnement fiable et irréversible.

D'une façon générale, ce type de dispositif comporte un témoin de fusion matérialisé par un volume géométrique obtenu par congélation d'une substance liquide qui est de préférence colorée dans sa masse, afin de la rendre plus visible de l'extérieur de l'emballage de protection dans lequel elle se trouve placée. Ce liquide peut être luminescent, fluorescent, phosphorescent selon les cas ; il est constitué par la congélation d'un liquide auquel sont mélangés différents adjuvants (produits colorants, luminescents, fluorescents, phosphorescents, antigel) de façon à prédéterminer l'image thermique ou frigorifique du produit réfrigéré auquel il est adjoint.

Le témoin de fusion est placé vers le centre d'une enceinte hermétique qui peut être constituée d'un simple sachet ou étui.

Le sachet ou étui (cylindre, ampoule, anneau, prisme, sphère, parallélépipède -cube en particulier- etc) sont munis d'index de centrage dans leurs parties internes, de façon à pouvoir disposer le témoin de fusion au centre géométrique de leur cavité ; ils sont rendus étanches par construction après inclusion du témoin de fusion.

La présente invention concerne un dispositif particulier adaptable aux indicateurs d'état de conservation pour produits congelés ou réfrigérés et perfectionne ainsi les dispositifs décrits notamment dans les demandes de brevets de la demanderesse EP-A-486.380, EP-A-501.880, EP-A-528.712, EP-A-545.274, EP-A-545.276, EP-A-553.008.

Selon la présente invention, l'indicateur d'état de conservation pour produits congelés ou réfrigérés de type industriel ou alimentaire est caractérisé par l'utilisation d'un étui, en matière plastique transparente ou en verre, de forme géométrique quelconque dont l'orifice de remplissage est obturé par un bouchon, de paraffine, de cire ou "holt melt" coulé à chaud sur la surface du liquide disposé à l'intérieur de l'étui et permet d'obtenir un remplissage intégral de la cavité interne à l'étui comme il sera expliqué dans la description des figures.

L'indicateur d'état selon l'invention peut, en outre, se caractériser par la réalisation à l'intérieur d'un étui de protection cylindrique, d'un étui réservoir concentrique au premier par moulage de l'ensemble, ou par emboîtement d'un tube cylindrique en matière plastique ou en verre, d'une hauteur inférieure à la profondeur de l'étui de protection extérieure, sur un bouchon intérieur ou mamelon propre à l'étui de protection extérieure du dispositif, la fermeture de l'orifice de remplissage de l'étui intérieur et de l'étui de protection extérieur étant réalisée par coulage de deux bouchons de cire.

L'indicateur d'état de conservation selon l'invention peut également être caractérisé par l'utilisation d'un séparateur placé à la surface de séparation de deux liquides non miscibles ou de deux matières ayant des températures différentes, afin d'éliminer les tensions superficielles, ce séparateur pouvant être un indicateur colorimétrique qui détecte un vieillissement ou une altération des produits utilisés, en mettant en évidence leur indice d'acidité.

L'indicateur d'état selon l'invention, dans une forme particulière, est caractérisé par l'utilisation d'un bouchon en cire intégrant un capillaire, et déterminant dans un étui en matière plastique ou en verre deux cavités de part et d'autre de ce bouchon, l'une contenant un liquide eutectique ou une solution alcoolique, remplissant la cavité ainsi définie d'une manière intégrale, l'autre cavité étant remplie environ à 90 % de sa capacité et recevant un liquide identique mais de pH opposé auquel on a ajouté un réactif coloré (par exemple bromotymol, tournesol, etc.) engendrant une réaction colorimétrique sur l'ensemble des liquides remplissant l'étui lors d'un changement de phase "solidus-liquidus" à la décongélation après destruction du bouchon dans la phase "liquidus-solidus".

Dans d'autres formes de réalisation, l'indicateur d'état de conservation est caractérisé par la présence d'une cloison en cire ou matière équivalente qui glisse ou se détruit à l'intérieur d'un étui en matière plastique ou en verre provoquée par l'augmentation de volume d'un liquide emprisonné dans une cavité par cette cloison ou ce bouchon avant congélation ; la destruction par fissuration ou le glissement du bouchon permet la migration du liquide provenant de la masse solidifiée lors d'une décongélation vers une matière absorbante ou adsorbante qui se colore par la nature du liquide utilisé, ou par réaction colorimétrique due au pH.

L'indicateur d'état peut encore être caractérisé par l'utilisation d'un étui en matière plastique ou en verre qui possède dans sa partie intérieure un étranglement ou une diminution de section, ou des protubérances internes sous forme de pointes venues de moulage et disposées orthogonalement par rapport à l'axe longitudinal de l'étui.

De préférence, on utilise à titre de cire soit une paraffine, soit la stéarine, soit toute cire équivalente ou holt melt.

L'invention concerne, de façon plus précise un dispositif de mise en oeuvre d'un indicateur d'état de conservation pour produit congelé ou réfrigéré de type industriel, médical ou alimentaire qui est caractérisé par l'utilisation d'une enveloppe en matière plastique souple, ou en matériau équivalent, ou en verre ou en matériel non étanche, à l'intérieur de laquelle on a constitué une ou plusieurs cavités ayant la particularité de posséder au moins une cloison commune pour chacune d'entre elles, dans laquelle, se trouvent ménagés un ou plusieurs orifices de communication, constitués par l'inclusion d'un ou plusieurs capillaires (fil, de type végétal, ou synthétique, piste capillaire, tube capillaire, etc.) lors de la réalisation des cloisons. Le dispositif se caractérise également par l'utilisation d'un liquide coloré du type eutectique, ou d'une solution alcoolique plus ou moins diluée, de tout liquide non toxique, fluorescent, phosphorescent, faiblement basique ou acide, susceptible de migrer dans un capillaire, afin de sensibiliser et colorer une matière absorbante ou adsorbante, ou un marqueur colorimétrique, disposé dans une cavité du dispositif réservée à cet effet et servant de surface d'observation, pour constater le ou le non fonctionnement du dispositif lors d'une décongélation, c'est-à-dire pour détecter une décongélation.

On peut utiliser une fermeture par clip, soudure, bouchon ou équivalente , nécessaire(s) à l'obtention de cloisons étanches extérieurement.

L'invention concerne également un système de détection s'intégrant dans le dispositif que l'on vient de décrire et qui se caractérise par la réalisation d'une cavité provisoire, ou cavité de mise en charge du liquide au sein du réservoir réservé à cet effet, permettant d'isoler les capillaires du liquide lors de sa conception, disposition facilitant le stockage et la mise en service à l'emballage des produits.

Le système de détection (détecteur) est avantageusement caractérisé par la réalisation d'une cavité provisoire, obtenue par pincement extérieur de la paroi du réservoir de liquide selon un plan de pliage transversal, à l'axe longitudinal de symétrie du dispositif, maintenu au moyen d'un clip ou d'une pince amovible lors de la mise en service du détecteur, un rabattement à 180°C de l'enveloppe extérieure suivant un axe perpendiculaire à l'axe longitudinal du système (et passant par le réservoir) assurant une double fermeture de la cavité de mise en charge du réservoir, cette fermeture étant maintenue par un adhésif double face disposé de part et d'autre du plan de pliage ou par points de soudure judicieusement disposer pour maintenir le double pliage jusqu'à la mise en service du détecteur.

Selon une variante de l'invention, le dispositif est caractérisé par l'utilisation d'un interrupteur d'écoulement de liquide sur le circuit des capillaires, afin d'éviter lors de la fabrication du dispositif et notamment lors du remplissage du réservoir de liquide, d'engendrer une migration de liquide vers la cavité d'observation, si celui-ci n'est pas congelé. L'interrupteur d'écoulement s'obtient par pliage et pinçage du tube capillaire ou de l'enveloppe qui contient le ou les capillaires à un endroit prédéterminé à la construction par la réalisation d'une discontinuité au sein de ceux-ci.

On pourra utiliser un temporisateur, ou retardateur de fonctionnement, disposé entre la cavité réservée au marqueur et la partie de la cavité située en aval de l'interrupteur d'écoulement du liquide. Il est constitué d'un parcours sinueux des capillaires où chaque changement de sens est marqué par la réalisation d'une cloison soudée, retardant la migration du liquide dans la liaison entre la cavité réservoir et la cavité d'observation garnie d'absorbeur.

On pourra utiliser des radiateurs ou des sondes constitués de rubans adhésifs pourvus d'une pellicule plastique aluminisée fixés sur le réservoir ou cavité contenant le liquide, et raccordés en différents points de la masse ou volume à surveiller.

Le dispositif selon l'invention peut également comporter l'utilisation d'une piste, d'une empreinte d'un circuit imprimé, garnie ou réalisé au moyen d'un produit naturel ou synthétique pouvant se substituer aux produits capillaires jusqu'ici employés.

On utilisera également avantageusement un indicateur à activation manuelle ou automatique caractérisé par groupage sur un même plan horizontal de deux ou plusieurs indicateurs mono-grades pourvus d'organe de transfert de liquide par capillaires lors du changement de phase "solidus-liquidus" pour sensibiliser une cavité d'observation disposée à l'extérieur de l'emballage du produit à surveiller.

On peut utiliser un fil comme marqueur, sa coloration par le liquide indiquant une décongélation, l'excédent de liquide drainé par le fil provoquant le masquage du code de lecture lorsque celui-ci est imprimé sur la cavité d'observation.

Le dispositif selon l'invention peut faire utilisation d'un absorbant au logo du fabricant disposé dans la cavité d'observation du détecteur.

Selon une variante de l'invention, celle-ci concerne en outre un indicateur d'état de conservation pour produits congelés ou réfrigérés de type industriel, médical ou alimentaire caractérisé par l'utilisation d'un étui, en matière plastique transparente ou en verre ou en matériel équivalent ou matériel non étanche (type papier buvard) de forme géométrique quelconque dont l'orifice de remplissage est obturé par un bouchon de cire, de stéarine, de paraffine, ou de "holt melt" coulé à chaud sur la surface du liquide disposé à l'intérieur de l'étui et permet d'obtenir un remplissage intégral de la cavité interne à l'étui.

L'indicateur d'état de conservation est également caractérisé par la réalisation possible à l'intérieur d'un étui de protection cylindrique, d'un étui réservoir concentrique au premier par moulage de l'ensemble, ou par emboîtement d'un type cylindrique en matière plastique ou en verre, d'une hauteur inférieure à la profondeur de l'étui de protection extérieure, sur un bouchon intérieur ou mamelon propre à l'étui de protection extérieur du dispositif, la fermeture de l'orifice de remplissage de l'étui intérieur et de l'étui de protection extérieur étant réalisée par coulage de deux bouchons de cire.

Avantageusement l'indicateur d'état de conservation comporte l'utilisation d'un séparateur placé à la limite entre deux liquides non miscibles ou de deux matières ayant des températures différentes, afin d'éliminer les tensions superficielles ; ce séparateur peut être un indicateur colorimétrique qui détecte un vieillissement ou une altération des produits utilisés, en mettant en évidence leur indice d'acidité ou d'alcalinité.

L'indicateur d'état peut également être caractérisé par l'utilisation d'un bouchon en cire intégrant un capillaire et déterminant dans un étui en matière plastique ou en verre deux cavités de part et d'autre de ce bouchon, l'une contenant un liquide eutectique ou une solution alcoolique, remplissant la cavité ainsi définie d'une manière intégrale, l'autre cavité étant remplie à 90 % de sa capacité et recevant un liquide identique mais de pH opposé auquel on a ajouté un réactif coloré (par exemple bromotymol, tournesol, etc.) engendrant une réaction colorimétrique sur l'ensemble des liquides remplissant l'étui lors d'un changement de phase "solidus-liquidus" à la décongélation après destruction du bouchon dans la phase "liquidus-solidus".

Une autre variante concernant l'indicateur d'état de conservation est l'emploi d'une cloison en cire qui glisse ou se détruit à l'intérieur d'un étui en matière plastique ou en verre ou en matériel non étanche, provoquée par l'augmentation de volume d'un liquide emprisonné dans une cavité par cette cloison ou ce bouchon avant congélation, la destruction par fissuration ou le glissement du bouchon, permettant la migration du liquide provenant de la masse solidifiée lors d'une décongélation vers une matière absorbante ou adsorbante qui se colore par la nature du liquide utilisé, ou par réaction colorimétrique due au pH.

L'invention concerne encore un indicateur d'état caractérisé par l'utilisation d'un étui en matière plastique ou en verre ou en matériel non étanche qui possède dans sa partie intérieure un étranglement ou une diminution de section ou des protubérances internes sous forme de pointes venues de moulage et disposées orthogonalement par rapport à l'axe longitudinal de l'étui.

A noter que pour l'emploi du dit-indicateur d'état la cire utilisée est avantageusement une paraffine. Avantageusement, également, la cire est la stéarine.

Une autre variante concerne un indicateur à activation automatique est l'utilisation d'un sachet souple hermétique, transparent en tout ou partie intégrant dans sa cavité interne, un étui ou cavité réservoir rempli d'une manière intégrale de liquide eutectique, qui se brise à la congélation et provoque la mise en contact du volume de liquide solidifié avec un ou plusieurs capillaires dont la longueur permet de vérifier à l'extérieur de l'emballage le changement de phase "solidus-liquidus" provoqué par une remontée de température au sein de l'emballage protégeant la denrée congelée ou surgelée.

L'indicateur à activation automatique selon l'invention se caractérise encore par l'utilisation d'un film ou d'une matière plastique pour la réalisation d'un étui ou cavité réservoir étanche et souple qui s'autodétruit ou se brise à la congélation permettant de libérer le liquide qu'il emprisonne lors d'un changement de phase "solidus-liquidus" consécutif à une remontée de température.

Lorsque l'indicateur fonctionne à activation manuelle ou automatique, on peut utiliser une cavité d'observation obtenue par l'extrusion d'une gaine en matière plastique souple et transparente sur un support constitué par un ou plusieurs capillaires.

Pour un indicateur à activation automatique ou manuelle on pourra utiliser un ou plusieurs capillaires comme marqueur et artifice de transfert entre l'étui ou cavité réservoir disposé à l'intérieur d'un emballage de produits surgelés ou congelés et une cavité d'observation située à l'extérieur de l'emballage.

L'indicateur à activation manuelle ou automatique peut en outre être caractérisé par le groupage d'un ou plusieurs indicateurs mono grade dont les liquides de pH différents sensibilisent par l'intermédiaire de capillaires un marqueur commun situé à l'extérieur de l'emballage.

On notera que l'indicateur à activation automatique peut encore être caractérisé par l'utilisation d'un organe générateur constitué par un volume de matière absorbante imprégnée à saturation, de liquide eutectique, enrobé d'une pellicule de paraffine ou de stéarine en contact avec un capillaire.

Il peut être caractérisé par l'utilisation d'une cavité ou étui réservoir obtenu par inclusion de liquide eutectique dans un volume de paraffine, de stéarine, de cire, ou de graisse porté en fusion.

L'indicateur à activation manuelle peut se caractériser par la disposition d'un pliage supplémentaire ou d'un mastic souple à l'intérieur du double pliage de l'enveloppe extérieure lors de la réalisation de la cavité réservoir et de la cavité d'observation du dispositif. Dans ce cas, l'indicateur souple à activation manuelle est avantageusement caractérisé lors de la réalisation de l'étui à partir d'un film de matière plastique de constituer un rétrécissement de la section de communication entre la cavité d'observation et la cavité réservoir du système par la création d'un canal d'écoulement sur lequel se réalise le double pliage de l'étui et la disposition sur les parties de l'étui de chaque côté du canal d'écoulement, des points de soudure servant au maintien du double pliage.

Selon une variante, l'indicateur souple à activation automatique est caractérisé par l'utilisation d'une poudre entourant le réservoir et qui se gélifie lors de la migration du liquide eutectique après éclatement de l'étui et ce afin de réguler l'écoulement du liquide eutectique dans l'étui où se trouve placé le capillaire.

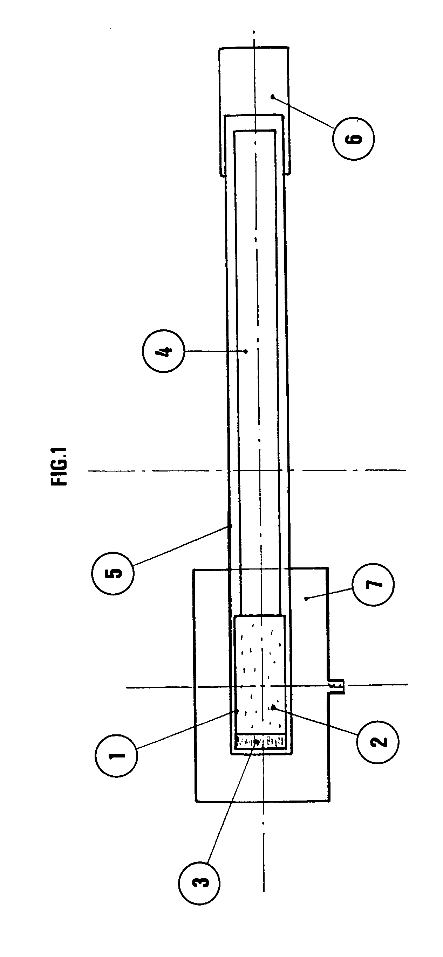

Les figures 1 à 10 illustrent divers aspects de l'invention.

La figure 1 représente un indicateur d'état de conservation pour produits congelés ou réfrigérés, constitué d'au moins un étui (1) pouvant avoir une forme cubique, parallèlépipédique, tronconique, sphérique, cylindrique pour la plus utilisée, ayant au moins un orifice de remplissage dont les bords sont incurvés vers l'intérieur de la cavité qui représente l'étui réservoir.

L'étui réservoir (1) est rempli au moins partiellement et par exemple à 90 % de sa capacité de liquide eutectique (2) ou d'une solution alcoolique. L'obturation de l'étui (1) est réalisée en complétant le remplissage en coulant à chaud de la paraffine (3) (la paraffine peut être remplacée par de la stéarine ou une cire équivalent ou holt melt). Par cette méthode on obtient un remplissage sensiblement intégral de l'étui réservoir (1).

L'étui réservoir peut être en verre, en matière plastique et il est entouré d'une matière absorbante ou adsorbante (4) (papier buvard, coton, ponce, etc. ou tout type de matériel non étanche) l'ensemble est ensuite disposé dans un sachet de protection (5) en matière plastique ou matière équivalente étanche et transparent du type souple ou rigide. L'étui réservoir est protégé mécaniquement par une coque rigide (7) pourvue d'une surface adhésive (6) venant s'ajouter au sachet (5).

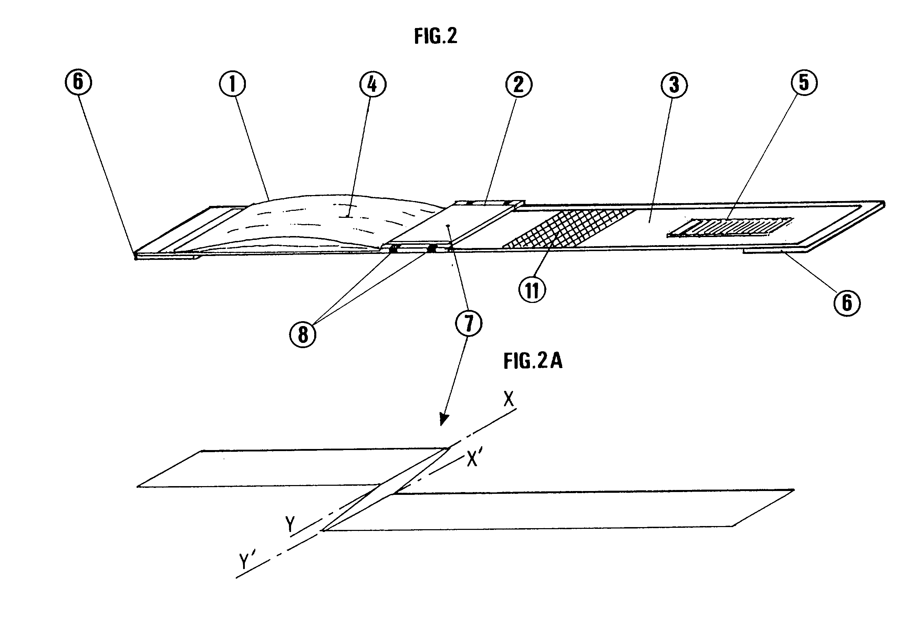

La figure 2 représente un indicateur constitué d'au moins un sachet parallélépipédique (1) en matière plastique souple et transparente de faibles dimensions extérieures pourvu de surfaces d'amarrage adhésives (6). La partie interne du sachet est constituée par au moins deux cavités (3) et (4) hermétiques extérieurement dont les orifices de remplissage (9) et (10) sont obturés par soudure, la cavité (3) est garnie d'une matière absorbante ou adsorbante, d'un ou plusieurs capillaires, d'une piste capillaire imprimée dans le film plastique avec lequel on réalisera les sachets.

Le remplissage de la cavité (4) du sachet (ou réservoir du dispositif) se fait au moyen d'un liquide eutectique de préférence ou d'une solution alcoolique adaptée, d'une paraffine, après que l'on ait effectué un double pliage selon les axes (7) X Y et X' Y' permettant de réaliser une cloison entre les cavités (3) et (4). Cette disposition de construction évite de mettre le liquide en contact avec le ou les capillaires et l'absorbant ce qui facilite la fabrication et le stockage des dispositifs.

Les liquides utilisés pour le remplissage de la cavité réservoir (4) sont colorés; ils peuvent être luminescents, fluorescents, phosphorescents dont les caractéristiques physiques point de congélation et de décongélation, point de goutte prédéterminent l'image thermique ou frigorifique du produit réfrigéré auquel ils sont adjoints.

La cavité réservoir (4) du dispositif est amarrée à l'intérieur de l'emballage du produit à surveiller au moyen de colle ou d'un adhésif double face (6). La cavité réservoir du dispositif subit les effets de la température ambiante de conservation du produit qu'elle accompagne. L'activation du dispositif étant manuelle, celle-ci s'effectue à la sortie du tunnel de congélation, dès lors qu'on a la certitude que le volume liquide emprisonné dans la cavité réservoir (4) est solidifié.

L'activation consiste à déplier le sachet en effectuant une traction sur la cavité d'observation (3) jusqu'à l'apparition dans sa totalité de la surface hachurée imprimée (11) à l'extérieur de l'emballage apportant la certitude de la rupture des points de soudure (8) maintenant le double pliage (2) et la suppression du cloisonnage entre les cavités (3) et (4). La traction sur la cavité d'observation du dispositif étant maintenue, on procède au rabattement de la cavité et à sa fixation sur l'extérieur de l'emballage au moyen de l'adhésif double face (6).

Le volume liquide de la cavité réservoir (4) étant solidifié, le reste aussi longtemps que la température de conservation assignée est supérieure à la température de fusion du volume de liquide eutectique solidifié ; dans le cas contraire, le liquide migre jusqu'à la cavité d'observation (3) qui se colore ou fait apparaître la mention "attention produit décongelé" ou "coloration = limite de température dépassée" ou "température de conservation non respectée" où la cavité d'observation est rendue inutilisable dans le cas où le code barres (5) s'y trouve imprimé.

Le fonctionnement du dispositif est irréversible. Il se réalise dans toutes les positions favorisé par l'utilisation de capillaires et de la légère surpression engendrée sur le volume liquide par les parois de la cavité réservoir (4) lors de la construction et de la tension sur la cavité d'observation à l'activation du système.

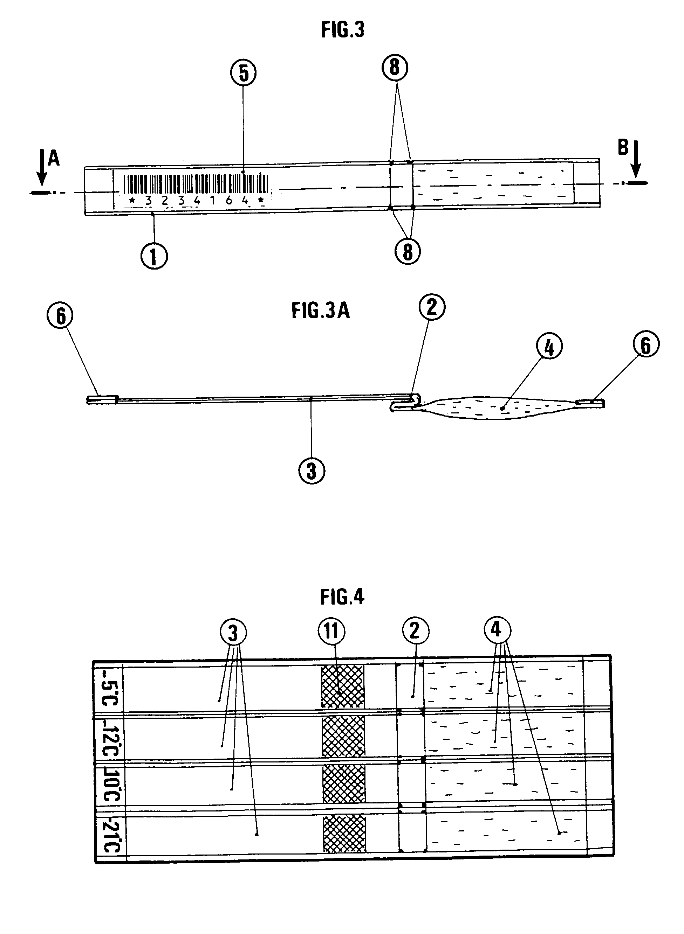

La figure 3 est une autre forme de représentation du dispositif décrit précédemment avec la disposition d'un code de lecture (5) placé sur la cavité d'observation (3) de même le marquage (11) est destiné à faciliter le positionnement du détecteur à l'intérieur de l'emballage en sachant que ce marquage apparaît en totalité à l'extérieur de l'emballage, et à cette seule condition, que lorsque le système est activé. Les autres repères de la figure sont ceux déjà expliqués à propos de la figure 2.

La figure 4 est une représentation d'un ensemble multigrades, composés de plusieurs dispositifs monogrades (avec pour chaque dispositif une cavité d'observation (3)) associés sur un support commun dont chaque cavité réservoir (4) est remplie d'un liquide eutectique ou non, dont le grade de température de fonctionnement est différent pour chacun d'entre eux, et dont la disposition est croissante ou décroissante selon la valeur du liquide eutectique retenu au départ pour la composition.

L'activation est analogue aux systèmes monogrades décrits précédemment, elle est simultanée pour l'ensemble des indicateurs dont le double pliage (2) est commun à l'ensemble ainsi que le repère de positionnement et d'activation (11).

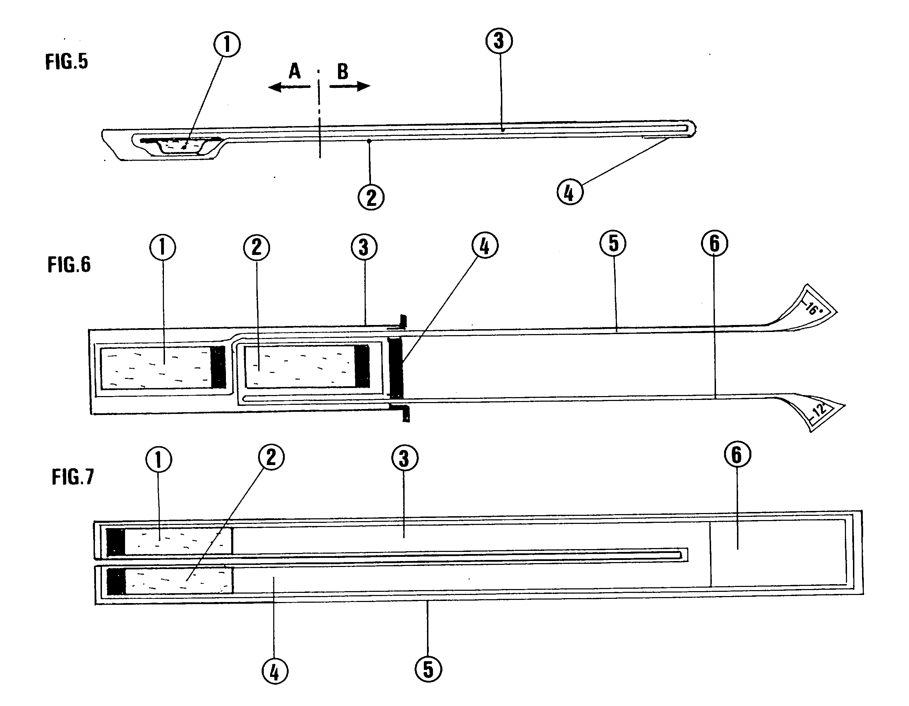

La figure 5 représente un dispositif à activation automatique réalisé à partir d'un étui hermétique (4) en matière plastique souple et transparente, de qualité alimentaire (2), à l'intérieur duquel on a disposé un étui réservoir (1) rempli d'une façon sensiblement intégrale d'un liquide eutectique de grade déterminé, entouré d'un film absorbant prolongé d'un capillaire (3).

Le trait mixte dessiné sur la figure définit deux zones A et B qui correspondent respectivement aux parties intérieures et extérieures de l'emballage.

Lors de la congélation sous l'effet de la dilatation du liquide, l'étui réservoir (1) ou son bouchon se brise et met le volume de liquide solidifié en contact avec les surfaces absorbantes (3), le dispositif est placé en état de veille. Une remontée en température de l'enceinte de conservation provoque un changement d'état "solidus-liquidus" et le liquide migre dans la cavité d'observation (3). L'adhésif (4) disposé sur la cavité d'observation sert à fixer celle-ci à l'extérieur de l'emballage.

La figure 6 représente un système bi-grades constitué de deux indicateurs mono-grades dont les étuis (1) et (2) sont remplis de liquides eutectiques de grade de température différents, dont la réalisation est analogue à la description précédente. Les capillaires (5) et (6) disposés sous enveloppe souple et hermétique, propre à chaque indicateur disposés à l'extérieur de l'emballage après avoir traversé le bouchon (4) de l'étui de protection (3) assurant la protection mécanique des étuis (1) et (2) disposés à l'intérieur de l'emballage.

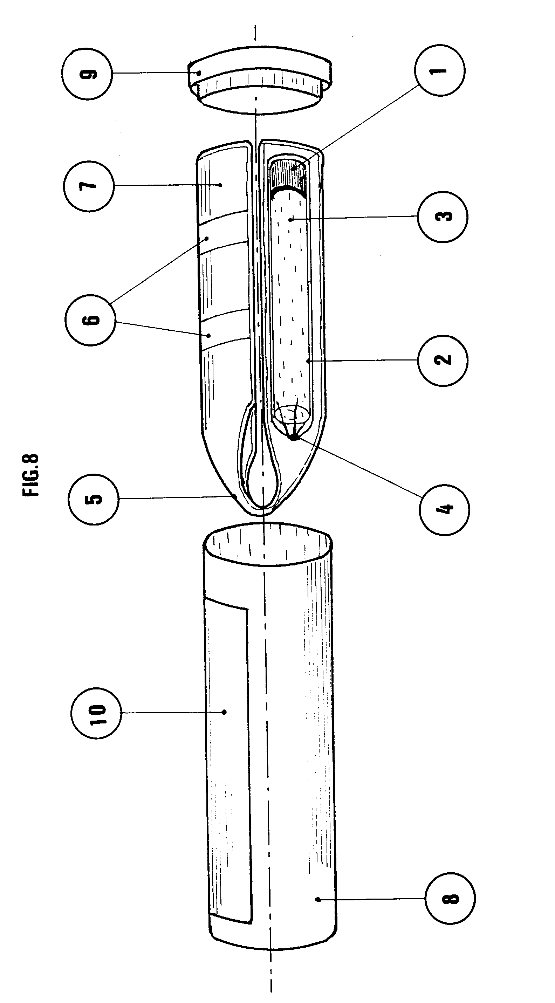

La figure 7 représente un dispositif réalisé à partir de deux indicateurs mono-grades dont les étuis (1) et (2) sont remplis de liquides eutectiques de grades de température et de pH différents qui se brisent à la congélation. Lors d'une décongélation les masses solidifiées se liquéfient et migrent par les capillaires (3) et (4) jusqu'à une surface indicatrice commune (6) du type colorimétrique qui vire de couleur au mélange des deux liquides eutectiques. L'ensemble étuis, capillaires, surface colorimétrique est placé sous une enveloppe hermétique étanche et transparente en matière plastique (5).

La figure 8 représente un dispositif à activation automatique constitué par un sachet souple et hermétique en matière plastique transparente (5) à l'intérieur duquel se trouve disposé un étui réservoir (2) rempli de liquide eutectique (3) obturé par un bouchon de paraffine, de stéarine, de cire ou holt-melt (1). L'étui est éventuellement garni d'un ralentisseur de diffusion constitué par un sachet (4) en film biodégradable. L'ensemble étui et ralentisseur est en contact avec une matière absorbante ou adsorbante (papier buvard, etc.) généralement non étanche constituant la surface d'observation (7). La surface d'observation peut recevoir ou être constituée de bandes (6) ou surfaces non visibles à l'imprégnation lors de la migration du liquide. L'ensemble du dispositif est placé dans une protection mécanique constituée par un étui par exemple en polypropylène) (8) muni d'un bouchon (9) soudé ou collé après introduction du dispositif ci-dessus décrit. L'étui (8) peut être opaque à l'observation sur l'ensemble à l'exception d'une fenêtre (10) qui permet de voir le fonctionnement du détecteur.

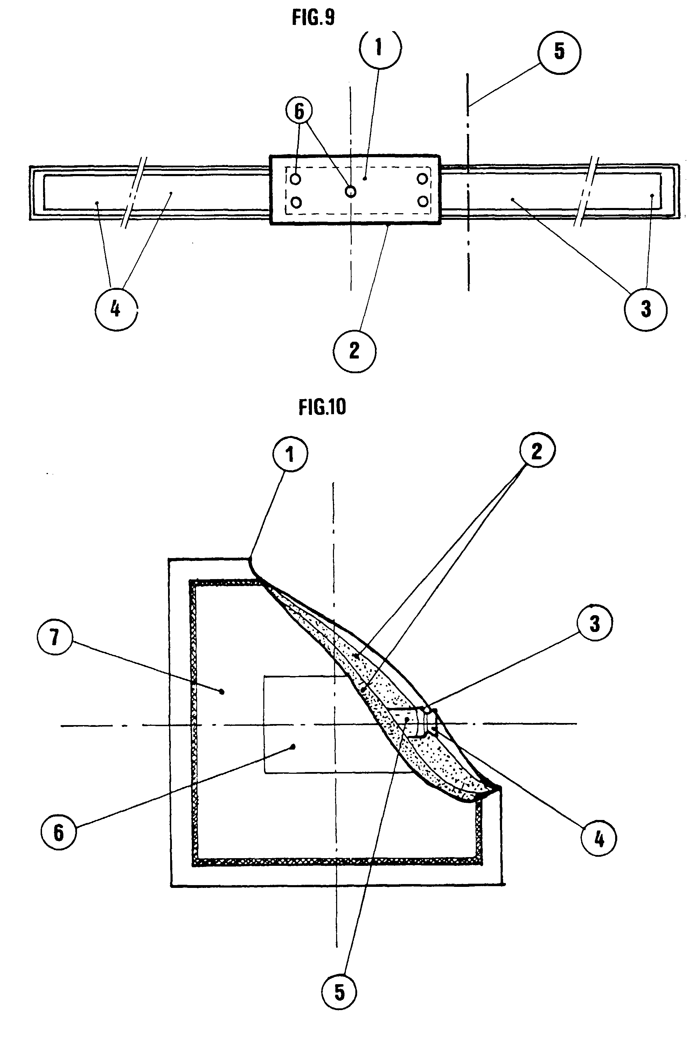

La figure 9 représente un indicateur d'état de conservation à activation automatique à la congélation comprenant : une enveloppe hermétique en matière plastique souple et transparente (7) dans laquelle se trouve placé un étui réservoir (1) rempli de liquide eutectique en contact avec une matière absorbante (3). La partie de l'enveloppe souple de l'indicateur où se trouve placé l'étui réservoir est disposée à l'intérieur d'un protecteur en matière plastique (2) thermoformée pourvu de trous de ventilation (6). Pincé à l'intérieur du protecteur mécanique thermoformé (2) et en contact avec la partie extérieure de l'indicateur où se trouve disposé l'étui réservoir (1) on dispose un ruban d'aluminium (4) sous gaine plastique (8) ou un film plastique aluminisé ayant un rôle de compensateur frigorifique sur la cavité réservoir du détecteur. Ce film d'aluminium peut être en contact avec un point assez éloigné de l'étui réservoir (1) ; il compense les déséquilibres de température qui peuvent se manifester sur une masse importante placée en ambiance de conservation. Le trait mixte (5) délimite deux zones : A zone de conservation, B zone extérieure à l'enceinte de conservation.

La figure 10 représente un indicateur de rupture de la chaîne du froid destiné aux suremballages et aux unités de vente de produits congelés conditionnés dans des sachets transparents. Le dispositif selon l'invention comprend : un sachet en matière plastique non transparente (1) réalisé par thermosoudage, hermétique, possédant sur sa face d'observation opaque (7) une fenêtre d'observation transparente (6). A l'intérieur du sachet (1) on dispose une enveloppe absorbante (2) dans laquelle se trouve placé, un étui en verre ou en matière plastique ou en matière non étanche (papier buvard, etc..) (3) rempli d'un liquide eutectique coloré (5) d'un grade de température bien déterminé, l'étui étant obturé après remplissage par un bouchon de holt melt (3).

Lors de la congélation, le liquide eutectique (5) se dilate et fait éclater l'étui, le volume liquide eutectique solidifié est mis en contact avec l'absorbant (2). Une montée en température provoque la liquéfaction du volume solidifié et sa migration vers l'absorbant (2) qui se colore. Ce changement d'état est rendu visible à travers la fenêtre (6).

A partir du principe exposé, il est possible de créer des dispositifs multigrades avec deux, trois ou quatre indicateurs monogrades, remplis de liquide colorés, de grade de température différents, dont le fonctionnement du dispositif est facilement identifiable sur la fenêtre d'observation (6).

A titre de variante, l'invention concerne également un indicateur à activation automatique à la congélation caractérisé par l'utilisation d'au moins un étui en matière absorbante ou adsorbante (par exemple papier buvard, matière synthétique à fort pouvoir adsorbant) dont les parois de la cavité interne sont recouvertes d'au moins une pellicule (généralement légère) de paraffine, stéarine ou tout matériau équivalent (par exemple un vernis) capable d'assurer une étanchéité lors du remplissage intégral de la cavité interne par un liquide eutectique ou non, afin de constituer l'élément générateur du système. La matière absorbante ou adsorbante est par exemple du papier buvard mais peut être tout type de papier non étanche. Ce genre de support présente l'avantage par rapport au verre de ne pas, une fois cassé, donner des mélanges de verre cassé qui risqueraient de se répandre dans la nourriture. En effet, la pellicule de paraffine se dépose sur le matériel non étanche (de type buvard) et forme un étui. Mais lors de l'éclatement de l'étui, le papier se fractionne mais ne se disperse pas de façon désastreuse comme ce serait le cas avec un étui brisé en verre.

L'invention peut concerner également un indicateur à activation automatique caractérisé par l'utilisation d'au moins un étui absorbant ou adsorbant rigide dont la partie interne se fissure sous l'effet de la dilatation à la congélation du liquide qui s'y trouve emprisonné, et dont la partie externe absorbante de l'étui sert d'élément indicateur lors d'un changement de phase "solidus-liquidus".

## Revendications

1. Indicateur d'état de conservation (voir figure 1) pour produits congelés ou réfrigérés, constitué d'au moins un étui (1) pouvant avoir une forme cubique, tronconique, sphérique, cylindrique, ayant au moins un orifice de remplissage dont les bords sont incurvés vers l'intérieur de la cavité qui représente l'étui réservoir,
l'étui réservoir (1) étant rempli au moins en partie de liquide eutectique (2) ou d'une solution alcoolique., l'obturation de l'étui (1) étant réalisée en complétant le remplissage en coulant à chaud de la paraffine (3) (la paraffine peut être remplacée par de la stéarine ou une cire équivalente ou holt melt), de façon à obtenir un remplissage sensiblement intégral de l'étui réservoir (1),
l'étui réservoir, en verre ou en matière plastique étant entouré d'une matière absorbante ou adsorbante (4), l'ensemble étant ensuite disposé dans un sachet de protection (5) en matière plastique ou matière équivalente étanche et transparent du type souple ou rigide, l'étui réservoir étant protégé mécaniquement par une coque rigide (7) pourvue d'une surface adhésive (6) venant s'ajouter au sachet (5).

2. Indicateur d'état de conservation constitué d'au moins un sachet parallélépipédique (1) (voir figure 2) en matière plastique souple et transparente de faibles dimensions extérieures pourvu de surfaces d'amarrage adhésives (6), la partie interne du sachet étant constituée par au moins deux cavités (3) et (4) hermétiques extérieurement dont les orifices de remplissage (9) et (10) sont obturés par soudure, la cavité (3) étant garnie d'une matière absorbante ou adsorbante, d'un ou plusieurs capillaires, d'une piste capillaire imprimée dans un film plastique qui sert à réaliser les sachets,
le remplissage de la cavité (4) du sachet (ou réservoir du dispositif) se faisant (figure 2A) au moyen d'un liquide eutectique ou d'une solution alcoolique adaptée, après que l'on ait effectué un double pliage selon les axes (7) X Y et X' Y' permettant de réaliser une cloison entre les cavités (3) et (4),
la cavité réservoir (4) du dispositif est amarrée à l'intérieur de l'emballage du produit à surveiller au moyen de colle ou d'un adhésif double face (6).

3. Indicateur d'état de conservation selon l'une des revendications 1 et 2, comportant une disposition d'un code de lecture (5) placé sur la cavité d'observation (3).

4. Indicateur selon l'une des revendications 1 à 3, comportant (figure 4) un ensemble multigrades, composés de plusieurs dispositifs monogrades (avec pour chaque dispositif une cavité d'observation (3)) associés sur un support commun dont chaque cavité réservoir (4) est remplie d'un liquide eutectique ou non, dont le grade de température de fonctionnement est différent pour chacun d'entre eux, et dont la disposition est croissante ou décroissante selon la valeur du liquide eutectique retenu au départ pour la composition.

5. Indicateur selon l'une des revendications 1 à 4, comportant (voir figure 5) un dispositif à activation automatique réalisé à partir d'un étui hermétique (4) en matière plastique souple et transparente, de qualité alimentaire (2), à l'intérieur duquel on a disposé un étui réservoir (1) étant rempli d'une façon sensiblement intégrale d'un liquide eutectique de grade déterminé, entouré d'un film absorbant prolongé d'un capillaire (3).

6. Indicateur selon l'une des revendications 1 à 5, comportant (voir figure 6) un système bi-grades constitué de deux indicateurs mono-grades dont les étuis (1) et (2) sont remplis de liquides eutectiques de grade de température différents, les capillaires (5) et (6) étant disposés sous enveloppe souple et hermétique, propre à chaque indicateur disposés à l'extérieur de l'emballage après avoir traversé le bouchon (4) de l'étui de protection (3) assurant la protection mécanique des étuis (1) et (2) disposés à l'intérieur de l'emballage.

7. Indicateur selon l'une des revendications 4 et 6, comportant (voir figure 7) un dispositif réalisé à partir de deux indicateurs mono-grades dont les étuis (1) et (2) sont remplis de liquides eutectiques de grades de température et de pH différents qui se brisent à la congélation, de sorte que lors d'une décongélation, les masses solidifiées se liquéfient et migrent par les capillaires (3) et (4) jusqu'à une surface indicatrice commune (6) du type colorimétrique qui vire de couleur au mélange des deux liquides eutectiques, l'ensemble étuis, capillaires, surface colorimétrique étant placé sous une enveloppe hermétique étanche et transparente en matière plastique (5).

8. Indicateur d'état de conservation, comportant (voir figure 8) un dispositif à activation automatique constitué par un sachet souple et hermétique en matière plastique transparente (5) à l'intérieur duquel se trouve disposé un étui réservoir (2) rempli de liquide eutectique (3) obturé par un bouchon de paraffine, de stéarine, de cire ou holt-melt (1), l'étui étant éventuellement garni d'un ralentisseur de diffusion constitué par un sachet (4) en film biodégradable, l'ensemble étui et ralentisseur étant en contact avec une matière absorbante ou adsorbante (papier buvard, etc.) généralement non étanche constituant la surface d'observation (7), ladite surface d'observation pouvant recevoir ou être constituée de bandes (6) ou surfaces non visibles à l'imprégnation lors de la migration du liquide, l'ensemble du dispositif étant placé dans une protection mécanique constituée par un étui (8) muni d'un bouchon (9) soudé ou collé après introduction du dispositif ci-dessus décrit, l'étui (8) pouvant être opaque à l'observation sur l'ensemble à l'exception d'au moins une fenêtre (10) qui permet de voir le fonctionnement du détecteur.

9. Indicateur d'état de conservation selon l'une des revendications 1 à 8, comportant (voir figure 9) à activation automatique à la congélation comprenant : une enveloppe hermétique en matière plastique souple et transparente (7) dans laquelle se trouve placé un étui réservoir (1) rempli de liquide eutectique en contact avec une matière absorbante (3), la partie de l'enveloppe souple de l'indicateur où se trouve placé l'étui réservoir étant disposée à l'intérieur d'un protecteur en matière plastique (2) thermoformée pourvu de trous de ventilation (6), avec disposition d'un ruban d'aluminium (4) sous gaine plastique (8) ou d'un film plastique aluminisé ayant un rôle de compensateur frigorifique sur la cavité réservoir du détecteur, ce ruban ou ce film étant pincé à l'intérieur du protecteur mécanique thermoformé (2) et en contact avec la partie extérieure de l'indicateur où se trouve disposé l'étui réservoir (1).

10. Indicateur de rupture de la chaîne du froid selon l'une des revendications 1 à 9, destiné aux suremballages et aux unités de vente de produits congelés conditionnés dans des sachets transparents, comportant: un sachet en matière plastique non transparente (1) réalisé par thermosoudage, hermétique, possédant sur sa face d'observation opaque (7) une fenêtre d'observation transparente (6), avec à l'intérieur du sachet (1) disposition d'une enveloppe absorbante (2) dans laquelle se trouve placé, un étui en verre ou en matière plastique ou en matière non étanche (papier buvard, etc..) (3) rempli d'un liquide eutectique coloré (5) d'un grade de température bien déterminé, l'étui étant obturé après remplissage par un bouchon de cire (3).

11. Dispositif de mise en oeuvre d'un indicateur d'état de conservation pour produit congelé ou réfrigéré de type industriel, médical ou alimentaire, caractérisé par l'utilisation d'une enveloppe en matière plastique souple, ou en verre, à l'intérieur de laquelle on a constitué au moins une cavité ayant la particularité de posséder au moins une cloison commune pour chacune d'entre elles, dans laquelle, se trouve ménagé au moins un orifice de communication, constitué par l'inclusion d'au moins un capillaire lors de la réalisation des cloisons, le dispositif étant en outre caractérisé par l'utilisation d'un liquide coloré du type eutectique, ou d'une solution alcoolique de tout liquide non toxique, fluorescent ou phosphorescent, susceptible de migrer dans un capillaire, afin de sensibiliser et colorer une matière absorbante ou adsorbante ou un marqueur colorimétrique, disposé dans une cavité du dispositif réservée à cet effet et servant de surface d'observation, pour détecter une décongélation.

12. Système de détection selon la revendication 11 caractérisé par la réalisation d'une cavité provisoire, obtenue par pincement extérieur de la paroi du réservoir de liquide selon un plan de pliage transversal, à l'axe longitudinal de symétrie du dispositif, maintenu au moyen d'un clip ou d'une pince amovible lors de la mise en service du détecteur, un rabattement à 180 °C de l'enveloppe extérieure suivant un axe perpendiculaire à l'axe longitudinal du système (et passant par le réservoir) assurant une double fermeture de la cavité de mise en charge du réservoir, cette fermeture étant maintenue par un adhésif double face disposé de part et d'autre du plan de pliage ou par points de soudure judicieusement disposer pour maintenir le double pliage jusqu'à la mise en service du détecteur.

13. Indicateur d'état de conservation pour produits congelés ou réfrigérés de type industriel, médical ou alimentaire caractérisé par l'utilisation d'un étui, en matière plastique transparente ou en verre, non étanche, dont l'orifice de remplissage est obturé par un bouchon de cire, de stéarine, de paraffine, coulé à chaud sur la surface du liquide disposé à l'intérieur de l'étui et permettant d'obtenir un remplissage intégral de la cavité interne à l'étui.

14. Indicateur d'état de conservation selon la revendication 13 caractérisé par la réalisation à l'intérieur d'un étui de protection cylindrique, d'un étui réservoir concentrique au premier par moulage de l'ensemble, ou par emboîtement d'un type cylindrique en matière plastique ou en verre, d'une hauteur inférieure à la profondeur de l'étui de protection extérieure, sur un bouchon intérieur ou mamelon propre à l'étui de protection extérieur du dispositif, la fermeture de l'orifice de remplissage de l'étui intérieur et de l'étui de protection extérieur étant réalisée par coulage de deux bouchons de cire.

15. Indicateur d'état de conservation selon l'une des revendications 13 et 14 caractérisé par l'utilisation d'un séparateur placé à la limite entre deux liquides non miscibles ou de deux matières ayant des températures différentes, afin d'éliminer les tensions superficielles, ce séparateur pouvant être un indicateur colorimétrique qui détecte un vieillissement ou une altération des produits utilisés, en mettant en évidence leur indice d'acidité ou d'alcalinité.

16. Indicateur d'état de conservation selon l'une des revendications 13 à 15 caractérisé par l'utilisation d'un bouchon en cire intégrant un capillaire et déterminant dans un étui en matière plastique ou en verre deux cavités de part et d'autre de ce bouchon, l'une contenant un liquide eutectique ou une solution alcoolique, remplissant la cavité ainsi définie d'une manière intégrale, l'autre cavité étant remplie à 90 % de sa capacité et recevant un liquide identique mais de pH opposé auquel on a ajouté un réactif coloré (par exemple bromotymol, tournesol, etc.) engendrant une réaction colorimétrique sur l'ensemble des liquides remplissant l'étui lors d'un changement de phase "solidus-liquidus" à la décongélation après destruction du bouchon dans la phase "liquidus-solidus".

17. Indicateur d'état de conservation selon l'une des revendications 13 à 16 caractérisé par l'emploi d'au moins une cloison en cire qui glisse ou se détruit à l'intérieur d'un étui en matière plastique ou en verre ou en matériau non étanche provoquée par l'augmentation de volume d'un liquide emprisonné dans une cavité par cette cloison ou ce bouchon avant congélation, la destruction par fissuration ou le glissement du bouchon, permettant la migration du liquide provenant de la masse solidifiée lors d'une décongélation vers une matière absorbante ou adsorbante qui se colore par la nature du liquide utilisé, ou par réaction colorimétrique due au pH.

18. Indicateur à activation automatique pour la mise en oeuvre de l'une des revendications 1 à 17 caractérisé par l'utilisation d'un sachet souple hermétique, transparent en tout ou partie intégrant dans sa cavité interne, un étui ou cavité réservoir rempli d'une manière intégrale de liquide eutectique, qui se brise à la congélation et provoque la mise en contact du volume de liquide solidifié avec un ou plusieurs capillaires dont la longueur permet de vérifier à l'extérieur de l'emballage le changement de phase "solidus-liquidus" provoqué par une remontée de température au sein de l'emballage protégeant la denrée congelée ou surgelée.

19. Indicateur à activation automatique pour la mise en oeuvre de l'une des revendications 1 à 18 caractérisé par l'utilisation d'un film ou d'une matière plastique pour la réalisation d'un étui ou cavité réservoir étanche et souple qui s'autodétruit ou se brise à la congélation permettant de libérer le liquide qu'il emprisonne lors d'un changement de phase "solidus-liquidus" consécutif à une remontée de température.

20. Indicateur souple à activation automatique pour la mise en oeuvre des dispositifs, systèmes et indicateurs des revendications 1 à 19, caractérisé par l'utilisation d'une poudre entourant le réservoir et qui se gélifie lors de la migration du liquide eutectique après éclatement de l'étui et ce afin de réguler l'écoulement du liquide eutectique dans l'étui où se trouve placé le capillaire.

21. Indicateur à activation automatique à la congélation pour la mise en oeuvre des dispositifs, systèmes et indicateurs des revendications 1 à 19, caractérisé par l'utilisation d'au moins un étui en matière absorbante non étanche dont les parois de la cavité interne sont recouvertes d'au moins une pellicule de paraffine, stéarine ou produit équivalent capable d'assurer une étanchéité lors du remplissage intégral de la cavité interne par un liquide eutectique ou non, afin de constituer l'élément générateur du système.

22. Indicateur à activation automatique pour la mise en oeuvre des dispositifs, systèmes et indicateurs des revendications 1 à 19, caractérisé par l'utilisation d'au moins un étui absorbant ou adsorbant rigide dont la partie interne se fissure sous l'effet de la dilatation à la congélation du liquide qui s'y trouve emprisonné et dont la partie externe absorbante de l'étui sert d'élément indicateur lors d'un changement de phase "solidus-liquidus".
